# EUROPEAN PATENT APPLICATION

(11) **EP 2 860 469 A1**
(43) Date of publication of application: **15.04.2015**
(21) Application number: 13188302.7
(22) Date of filing: 11.10.2013
(51) Int. Cl.: F24H 4/04, F24D 11/02, F28D 20/00, F25B 5/04

(54) **Water heater**

(71) Applicant: Nederlandse Organisatie voor Toegepast -Natuurwetenschappelijk Onderzoek TNO, 2628 VK Delft (NL)
(72) Inventor: ter Steeg, Robertus Theodorus Martinus, 2628 VK Delft (NL)
(74) Representative: Jansen, Cornelis Marinus

(57) **Abstract**

This document relates to a water heater for heating water stored in a vessel, comprising a heat pump for performing a thermodynamic cycle for providing heat from a refrigerant fluid to the water for heating of the water. The heat pump is arranged for circulating the refrigerant fluid through a plurality of heat exchanger units such as to cool the refrigerant fluid from a superheated gas state to a sub-cooled liquid state while providing heat to the water. A first heat exchanger pre-heats the water, and a second heat exchanger includes a refrigerant condenser. The water heater comprises water inlets for providing water to the heat exchanger units, at least one water outlet for returning water from the heat exchanger units to the vessel, and a plurality of pumps. The pumps a first pump for establishing a water flow through a first water conduit and a second pump for establishing a water flow through a second water conduit, for enabling independent regulation of the flow rate through said first and second water conduit for minimizing deviations in a temperature difference between the refrigerant fluid and the water in each of the first and second heat exchanger unit.

## Description

### Technical field

The invention relates to a water heater for heating water stored in at least one vessel, comprising a heat pump for performing a thermodynamic cycle for providing heat from a refrigerant fluid to the water for heating of the water, wherein the heat pump is arranged for circulating the refrigerant fluid through a plurality of heat exchanger units such as to cool the refrigerant fluid from a superheated gas state to a sub-cooled liquid state while providing heat to the water. The invention further relates to a water heater system comprising a plurality of such water heaters.

### Background

Water heaters as described above, that are based on operation of a heat pump for performing a thermodynamic cycle for heating the water, are a class of water heating devices that has been in development over the past years. Although this technology is potentially interesting, the present water heaters of this type are not sufficiently efficient to compete with other conventional technologies, such as electrical heaters.

Moreover, a requirement of water heaters to be used for providing tap water in buildings is that relatively large amounts of heated water should potentially be available instantaneously, for example for taking a shower or performing a domestic task. The conventional heat pump based water heaters presently available do not have the capacity to meet this requirement, or are too large to be practically or economically of interest.

Therefore, it is an object of the invention to overcome the abovementioned disadvantages and to increase the efficiency of heat pump based water heaters to a sufficient level such as to enable use thereof for hot water provisioning in buildings.

### Summary of the invention

These and other objects are achieved by the present invention in that there is provided, in accordance with a first aspect, a water heater for heating water stored in at least one vessel. The water heater comprises a heat pump for performing a thermodynamic cycle for providing heat from a refrigerant fluid to the water for heating of the water. The heat pump is arranged for circulating the refrigerant fluid through a plurality of heat exchanger units such as to cool the refrigerant fluid from a superheated gas state to a sub-cooled liquid state while providing heat to the water. The plurality of heat exchanger units comprise a first heat exchanger unit for pre-heating of the water while cooling the refrigerant fluid to the sub-cooled liquid state, comprising a first water conduit for transferring heat from the refrigerant fluid to the water, and a second heat exchanger unit including a refrigerant condenser unit for further heating of the water while condensing the refrigerant fluid, the second heat exchanger unit comprising a second water conduit for transferring heat from the refrigerant fluid to the water. The water heater further comprises one or more water inlets for providing water to the heat exchanger units, at least one water outlet for returning water from the heat exchanger units to the vessel, and a plurality of flow regulation units, such as pumps or flow regulation valves. The plurality of flow regulation units include a first regulation unit for establishing a water flow through the first water conduit and a second regulation unit for establishing a water flow through the second water conduit, for enabling independent regulation of the flow rate through said first and second water conduit. The flow rate is regulated independently for minimizing deviations in a temperature difference between the refrigerant fluid and the water in each of the first and second heat exchanger unit. As a result, the heat exchange from the refrigerant fluid to the water matches the state change of the refrigerant.

In a water heater in accordance with the present invention, exergy losses are down to a minimum. The heat exchangers are designed and controlled to match the state change of the refrigerant at the high pressure side (i.e. the refrigerant side) of the heat pump. The control of the first heat exchanger is focused on creating a subcooled liquid with a temperature just above the water temperature supplied to heat exchanger one. The control of the second heat exchanger is at least focused on providing a fully condensed refrigerant without sub cooling the liquid. The fact that the first regulation unit and the second regulation unit can be independently regulated enables to adapt the flow rate of water through each of the first and second heat exchanger units independently. Therefore, the flow rates in the first and second heat exchanger units can be regulated such that the heat removal capacity of each heat exchanger suits the state change of the refrigerant process in each single heat exchanger and thereby enables a low temperature difference between refrigerant fluid in the refrigerant circuit of the heat pump and the water in the water conduits in each of the first and second heat exchanger units. In other words, the flow rates can be regulated in each heat exchanger such that the temperature difference between the water and the refrigerant is more or less constant across the respective heat exchanger. Preferably, the temperature difference between refrigerant fluid and the water may be minimized in each heat exchanger. This optimizes the heat transfer process between the refrigerant fluid and the water being heated.

If the temperature difference between water and a refrigerant fluid in a heat exchanger is large, the heat is transferred to the water at a higher temperature than required. This results in exergy losses, because the performance of the heat transfer process is lower than what is theoretically achievable. Heat is most effectively exchanged if heat is removed gradually, while at the same time the temperature differences between the water and the refrigerant in every part in of the heat exchanging process is minimized.

The invention enables to account for the fact that the refrigerant in the condenser part of the second heat exchanger unit remains at a fixed temperature while condensing. Moreover, the invention also takes into account that in the sub-cooler part of the water heater (i.e. the first heat exchanger) the temperature towards the exit of the refrigerant circuit will decrease. To minimize the temperature difference in the condenser, the following two conditions may be met: firstly water may be added at the entrance of the second heat exchanger at approximately (but not exceeding) the condensation temperature, and secondly the water flow rate through the second conduit may be regulated such that the refrigerant out of second heat exchanger is fully condensated but not sub-cooled. This will minimize the temperature gradient of the water across the second conduit while effectively removing the heat from the refrigerant. The water that is provided to the second conduit at a temperature of approximately the condensation temperature of the refrigerant may typically have a temperature difference ΔT being ideally only a few degrees (e.g. ΔT ≤ 5 °C).

On the other hand, in the first heat exchanger the thermodynamic situation is different. The temperature of the refrigerant is at the condensation temperature upon entry, and will be sub-cooled to just above the water inlet temperature of the first heat exchanger. The latter ensures that heat is optimally removed from the refrigerant in the first heat exchanger unit, which may be achieved by effectively transferring the heat to the water while minimizing energy dissipation. At the same time, by keeping the temperature of the refrigerant as low as possible upon entry of an expansion valve downstream the first heat exchanger (e.g. in a vapour-compression heat pump cycle), the exergy loss of the expansion step is minimized. Therefore, lowering the temperature of the refrigerant to the lowest temperature of the water in the system improves the coefficient of performance (COP) of the heat pump without reducing the capacity of the heat pump.

Optimizing the heat exchanger process requires minimizing the temperature difference between the refrigerant and the water everywhere in the first heat exchanger as well. In accordance with the invention this is achieved by regulating the flow rate of the water flow in the first heat exchanger unit independent from the flow rate in the second heat exchanger unit. In particular, the flow rate in the first heat exchanger unit may be regulated such that water at the exit of the first heat exchanger unit is approximately at the condensation temperature of the refrigerant (i.e. at or slightly below the temperature at which the refrigerant enters the first heat exchanger). The refrigerant at the exit of the first heat exchanger unit in the refrigerant circuit will be sub-cooled to just above the temperature at which the water enters the first heat exchanger.

Because the first heat exchanger will operate in counterflow, this results in the temperature difference ΔT being minimal everywhere in the first heat exchanger unit. As will be appreciated, in the condenser of the second heat exchanger unit since the temperature of the refrigerant is fixed at the condensation temperature, the condenser may either operate in operate in counterflow or in unidirectional flow as long as the above conditions for the second heat exchanger are met.

For the second heat exchanger, providing water to the second conduit at approximately (i.e. slightly below) the condensation temperature of the refrigerant may be achieved in several ways. In some embodiments, a buffer vessel may store water at the desired temperature. Such a buffer vessel could for example receive water from the first heat exchanger unit. However, in accordance with a more advantageous embodiment, a stratified temperature profile in the vertical direction in the vessel may be created with the coldest water near the bottom and the hottest water near the top. This allows to create water inlets for any of the conduits of the heat exchanger units at a specific height in the vessel where the temperature of the water is known. For example, a water inlet may be created for the second conduit at a specific height in the vessel where the temperature is known to be slightly below the condensation temperature of the refrigerant. The advantage of this is that only a single vessel is required to store the tap water, which is beneficial in view of space limitations in houses and buildings. Creating such a temperature stratification also enables to ensure that water of the coldest temperature is provided at the inlet or entrance of the first heat exchanger, i.e. by taking water from the coldest (bottom) part of the vessel.

In accordance with another embodiment of the present invention, the water heater further comprises a control unit connected to at least one temperature sensor and/or pressure sensor for determining the end of the condensation phase at the refrigerant exit, said control unit being further connected to one or more of the flow regulation units associated with said at least one heat exchanger unit, for controlling said regulation unit dependent on the determined temperature difference.

As will be appreciated, the control unit may independently control the flow rate in the first and second heat exchanger unit dependent on temperature readings taken by temperature sensors in contact with the refrigerant circuit and the water conduits.

As may be appreciated, the number of temperature sensors used to determine the temperature differences across the heat exchanger unit may differ in different embodiments of the invention. Also, water heaters in accordance with various embodiments may comprise a single control unit or several control units for each heat exchanger unit.

In a preferred embodiment of the present invention, a plurality of heat exchanger units further comprises a third heat exchanger unit for further heating of the water while cooling the refrigerant fluid while in the super heated gas state prior to condensing thereof, a third heat exchanger unit comprising a third water conduit for transferring heat from the refrigerant unit to the water. Although in a more basic embodiment of the present invention, the second heat exchanger unit may comprise both a condenser section and a heat exchanger unit for the refrigerant fluid in the super heated gas state, it has been realised that the effect and advantages of the invention may be increased by adding the third heat exchanger unit in accordance with this embodiment to the water heater of the present invention. The control of the third heat exchanger is focused on the delivery of water at the top outlet at the final temperature (=set point temperature of hot tap water). In this third heat exchanger unit, since it comprises a third water conduit, the flow rate in the water conduit may be regulated independently from the flow rate in the first and in the second heat exchanger unit described above.

In particular, to minimize the temperature differences across a third heat exchanger unit, the flow rate in the third water conduit may be controlled such that the water leaves the heat exchanger at 60 deg,C. while reducing the condensing temperature of the refrigerant by having a higher water flow in the second heat exchanger. This increases the efficiency of the heat pump. Similar to the first heat exchanger unit, the third heat exchanger unit will operate in counter flow, i.e. the flow of water and the flow of refrigerant fluid will be in counter directions.

In accordance with a further embodiment of the present invention the plurality of flow regulation units comprise a third regulation unit for establishing a water flow through the third water conduit. This third regulation unit enables to independently regulate the flow rate through the third water conduit for minimizing the temperature difference between the refrigerant fluid and the water in the third heat exchanger unit. As will be appreciated, the third regulation unit may be controlled by the above mentioned control unit, and optionally the control unit may receive temperature readings between the third water conduit and the refrigerant circuit in the third heat exchanger unit from one or more suitably placed temperature sensors. For example, this may be achieved by using a flow regulation valve as flow regulation unit, e.g. by releasing part of the water from the second conduit of the second heat exchanger unit through a controllable valve to an intermediate outlet. This water may for example be returned to the vessel at a suitable height dependent on the temperature stratification. The flow rate in the third water conduit can thereby be reduced in a similar manner as controlling the flow rate in the first heat exchanger unit. Instead of or in addition to a flow regulation valve, also a pump may be implemented.

In accordance with embodiments of the invention, the flow regulation units, such as one or more of the third, second and third regulation unit, may comprise at least one of a pump or a flow regulation valve. As indicated above for the first and second regulation units, also the third regulation unit may comprise or be formed of a pump or a flow regulation valve. Pumps or flow regulation valves may be regulated using a control unit.

As already referred to above, in accordance with a further embodiment of the present invention, for establishing a stratified temperature profile across the height dimension or vertical dimension of the vessel, the at least one water outlet is arranged at a height position dependent on a water temperature of the water provided therefrom. The different first, second, and optionally third and further water conduits of the water heater of the present invention may be connected to one or more water outlets for disposing water to the vessel. For example, since the flow rate in the second heat exchanger unit is maximized, while this is not the case for the first (and optionally the third or further) heat exchanger unit, part of the water from the second conduit downstream of the condenser unit may be released towards the vessel. Moreover, in other variants of a water heater in accordance with the present invention, outlet may be present at the end of the first water conduit (or the third or further water conduit) as well. In all cases, a water outlet for releasing the fully heated water (i.e. the water that has completed the heating process) will be present all the way at the end of the last heat exchanger unit.

Water coming from each of the outlets, dependent on which water conduit and where the connection with the outlet is made, will have a different temperature. To maintain or create a suitable stratified temperature profile across the vertical dimension of the vessel, the outlets may be arranged in the vessel at different heights such that the coldest water is provided at the lowest point while the hottest water is provided at the highest point relative to the other outlets. Moreover, cold fresh water may be fed to the vessel from a fresh water supply line having an outlet in or near the bottom of the vessel. The water outlet from a first water conduit may release water, in accordance with the invention, at approximately the condensation temperature of the refrigerant fluid (this is an intermediate temperature between the fully heated water and the coldest water), and may be arranged somewhere in the middle section across the vertical direction of the vessel. Water from the second water conduit may be disposed through an outlet which is also arranged in the middle section of the vessel (this water will still have a temperature near the condensation temperature of the refrigerant fluid). Water from the last heat exchanger unit in the lines, having the desired temperature of heated water that is to be provided from the water heater system for domestic purposes, will be disposed through an outlet in the vessel at the top or near the top section of the vessel. As will be appreciated hot tap water drawn from the system for domestic purposes will in that case be taken from the top of the vessel where the water is maximally heated.

Although the temperature of the water increases across the second heat exchanger, the water temperature will be in a range that is approximately just below the condensation temperature. It is to be realised that heat is provided to the water by the condensation unit of the second heat exchanger, and therefore water that exits the second conduit will have a slightly higher temperature (closer to the condensation temperature) than the water at the inlet of the second conduit. Moreover, an outlet from the first water conduit (present in some embodiments) will provide water near the condensation temperature.

As will be appreciated, also any inlets, such as a first inlet for providing water to the first water conduit and a second inlet for providing water to a second conduit (and optionally any third or further inlets for providing water to any third or further conduits) may in case of a stratified temperature profile in the vessel be located at suitable heights within the vessel with respect to the temperature profile.

The heat pump of a water heater in accordance with the present invention preferably is a heat pump arranged for performing a vapour-compression cycle, wherein the heat pump further comprises an expansion unit for receiving the refrigerant fluid in the sub-cooled liquid state, an evaporated downstream of the expansion unit, and a compressor for providing the refrigerant fluid in the super heater state to the heat exchanger units. A benefit with respect to the coefficient of performance (COP) will be the largest for a heat pump of this type.

Moreover, in accordance with a further aspect of the present invention there is provided a water heater system comprising one or more water heaters as described hereinabove, wherein one or more associated inlets and outlets of the water heaters are interconnected such as to share the vessels between the water heaters. For example, inlets to the second conduit of each water heater may be interconnected such that one of the vessels may be cleaned while still using the heating capacity of the associated water heater. Such cleaning may for example be desired to prevent build up of undesired contaminations, such as legionella bacteria.

The invention in accordance with a further aspect thereof relates to the use of a water heater or water heater system as described above for the preparation of heated water in a building, such as tap water or heated water for a heating system for heating the building.

### Brief description of the drawings

Herein below, the invention will be described by some specific embodiment thereof, with reference to the enclosed drawings wherein:
Figure 1 illustrates a first embodiment of a water heater in accordance with the present invention;
Figure 2 illustrates a second embodiment of a water heater in accordance with the present invention;
Figure 3 illustrates a third embodiment of a water heater in accordance with the present invention;
Figure 4 provides a pH-graph illustrating a vapour compression cycle that may be used as the thermodynamic cycle in the heat pump of a water heater in accordance with the present invention.

### Detailed description

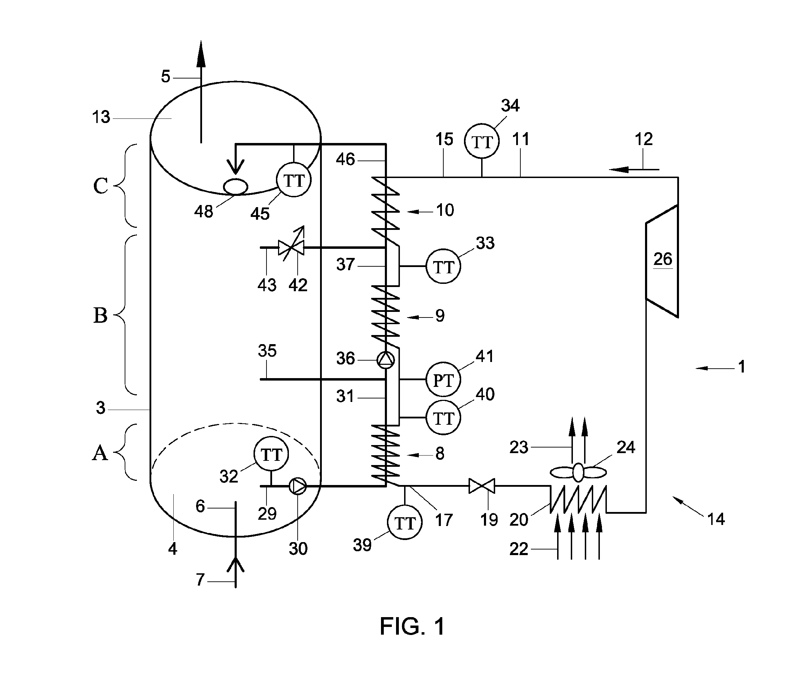

In figures 1-3, different embodiments of a water heater of the present invention are illustrated which will be described with reference to these drawings below. In these figures, references that refer to similar parts and elements of the different embodiments have been indicated by a same reference numeral.

In figure 1, a first embodiment of a water heater 1 is illustrated. The water heater 1 comprises a vessel 3 wherein tap water to be heated is temporarily stored. Within the vessel 3, a stratified temperature profile of the water has been created with the heat pump as will be described further below. The stratified temperature profile results in water having the lowest temperature being located at the bottom 4, and water of the highest temperature being located at the top 13 of the vessel 3. Although the stratification of the temperature profile may be perfectly linear from top to bottom, realistically different sections may be present within the vessel 3 having different governing temperatures or temperature gradients. For example, the vessel 3 may have a bottom section A wherein the coldest water is located, the water in this section being more or less of a same temperature or having a slight gradient towards the warmer parts of the vessel. The vessel may further comprise a top section C wherein the hottest water is located having a high temperature, which temperature is more or less similar throughout the section or having a slight gradient towards the colder parts of the vessel. The middle section B of the vessel 3 may be more or less of a same temperature, i.e. around the condensation temperature of the refrigerant fluid (to be explained below). As will be appreciated, any other temperature gradient may be present within the vessel 3 that may somehow be used to draw and release water of a given temperature at a suitable and predictable height.

Cold fresh water is fed to the vessel 3 via fresh water line 7 through fresh water inlet 6. Fresh water is provided to the coldest part of the vessel 3 as will be appreciated. Moreover, heated water for use in the building is drawn from the vessel through heated water line 5.

The water heater in accordance with the first embodiment of the present invention further comprises a heat pump 14. The heat pump 14 comprises a refrigerant circuit 11 wherein refrigerant fluid is circulated such as to perform a thermodynamic cycle. In the refrigerant circuit 11, a vapour compression cycle is applied that will be used for heating the water. The heat source of the heat pump can be air or liquid.

The refrigerant circuit 11 comprises a plurality of heat exchange units 8, 9 and 10. The heat exchange units 8, 9 and 10 of the embodiment of figure 1 each operate in counter flow, i.e. the water through the heat exchangers flows in counter direction relative to the direction of the refrigerant fluid. Therefore, the flow direction 12 indicates the direction of the refrigerant fluid through circuit 11. The heat exchanger units consists of a sub-cooler heat exchanger 8, a condenser type heat exchanger 9, and a de-superheater heat exchanger 10. On entry of the de-superheater heat exchanger 10 at point 15 of circuit 11, the refrigerant fluid will be in a superheated gas state being at its highest temperature in the circuit. Within de-superheater type heat exchanger 10, the refrigerant fluid cools down until it approximately reaches the condensation temperature at the end of heat exchanger unit 10. Downstream in circuit 11, the refrigerant fluid reaches the second heat exchanger unit 9 which comprises a condensation unit. In the condensation type heat exchanger 9, the refrigerant fluid is condensed until into its liquid state being still at the condensation temperature, or just below this temperature. As will be appreciated latent heat of evaporation will be released by the refrigerant fluid in the heat exchanger unit 9 which is transferred to the water being heated.

Further downstream in the sub-cooler type heat exchanger 8, the refrigerant fluid enters the heat exchanger unit 8 at the condensation temperature and is cooled down by the water until it reaches the coldest temperature of the high pressure side at point 17 at the end of the heat exchanger unit 8. The water is thereby heated to just below the condensation temperature of the refrigerant.

As mentioned above, each of the heat exchanger units 8, 9 and 10 are operated in counterflow. In a first heat exchanger unit 8, the sub-cooler type heat exchanger, water flows in counter direction to the refrigerant fluid through water conduit 31. Water is provided to the water conduit 31 by means of inlet 29 and pump 30. To obtain most efficient transfer of heat between the refrigerant fluid and the water in conduit 31, the flow rate of the water in conduit 31 is regulated by controlling operation of pump 30. Pump 30 may be controlled by a control unit (not shown) which receives temperature readings from a plurality of sensors, i.e. thermal sensors 32, 33, 34, 39, and 40, and pressure sensor 41. The pumps 30 (and 36) may also be manually controlled in an alternative embodiment, although this may be less practical. As will be appreciated, in order to determine the temperature differences, thermal sensors 32 and 45 may record the temperature in the conduits 31 and 46 while thermal sensors 33, 34, 39, and 40, and pressure sensor 41 are present in the refrigerant circuit 11. However, alternatively the number of temperature and/or pressure sensors may be different in different embodiments.

As mentioned hereinabove, the flow rates are regulated such that the heat removal capacity of each heat exchanger suits the state change of the refrigerant process in each single heat exchanger. This enables a low temperature difference between refrigerant fluid in the refrigerant circuit of the heat pump and the water in the water conduits in each of the first and second heat exchanger units. Therefore, the temperature difference between the water and refrigerant fluid is minimized given the size of the heat exchangers.. This may be obtained by carefully controlling operation of the pump 30 using readings from the temperature and pressure sensors. The second heat exchanger unit 9 comprising the condenser unit also comprises a conduit 37 through which the water flow can be independently regulated. To regulate the flow through conduit 37, a further pump 36 and inlet 35 are present in the water heater 1. The inlet 35 is located at a height in the intermediate section B of the vessel 3 such as to draw water at approximately the condensation temperature of the refrigerant fluid. Dependent on the readings from temperature and pressure sensors 32-34, 39-41, 45, pump 36 is controlled in order to condensate the refrigerant fully, while not subcooling it.

Then in heat exchanger unit 10, the de-superheater type heat exchanger, the flow rate may be carefully regulated again dependent on readings from temperature sensors 32-34, 39-41, 45. The control of pump 36 and the flow control valve 42 ensures that water is delivered at the setpoint temperature to the vessel by outlet 48. In the present embodiment this is achieved by controllable valve 42 and outlet 43. The controllable valve 42 will be controlled dependent on the readings from sensors 32-34, 39-41, 45 by the control unit (not shown). The flow rate through conduit 37 of heat exchanger unit 9 will be larger than the flow rate through conduit 46.The flow rate through conduit 46 may be accurately controlled through a controllable valve 42. As will be appreciated, controllable valve 42 may be replaced by the skilled person by a different unit, such as further pump if desired.

At the end of the conduit 46, the water will be at the highest temperature, preferably the set point temperature. This heated water is provided back to the vessel at outlet 48. From there, it can be used by drawing the heated water from the vessel through hot water supply line 5.

The vapour compression cycle established with refrigerant circuit 11 after point 17 further comprises an expansion valve 19 for lowering the pressure, after which the refrigerant fluid is provided to evaporator unit 20. In evaporator unit 20, air (or liquid) is used as heat source medium. This heat source medium flows through the evaporator by means of ventilator (or pump) unit 24 from the inlet 22 to the outlet 23 of unit 20. This will cause the refrigerant fluid in the refrigerant circuit 11 to receive heat drawn from the air (or liquid), transforming the refrigerant fluid back in the gas state. Downstream, compressor unit 26 increases the pressure and temperature again to bring it in the superheated gas state at point 15.

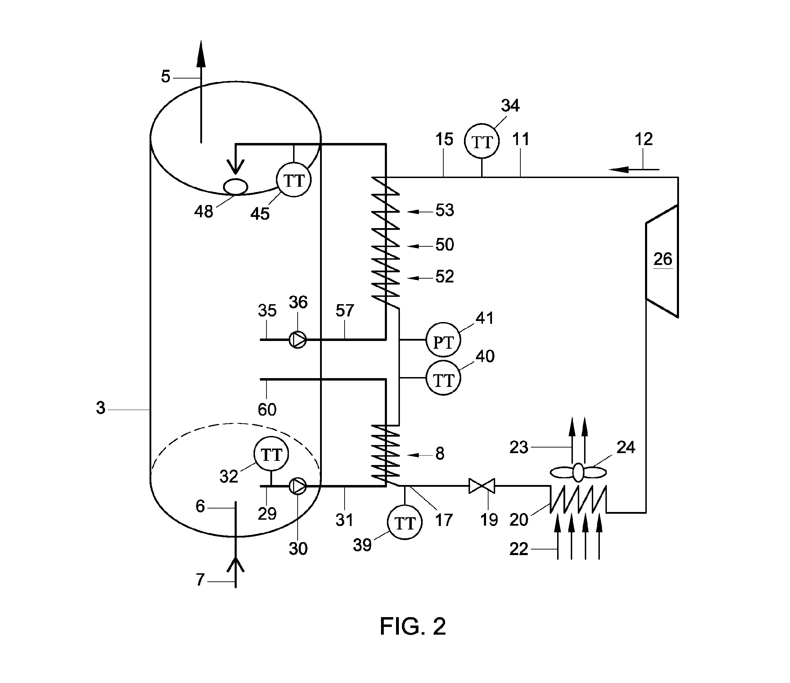

A further embodiment of a water heater in accordance with the present invention is illustrated in figure 2. In figure 2, the difference with the water heater of the embodiment in figure 1 can be found in a combination of the condenser unit 52 and the de-superheater heat exchanger 53 into a single heat exchanger unit 50. Therefore, the water heater of figure 2 comprises a first heat exchanger unit 8 and a second heat exchanger unit 50. The first heat exchanger unit 8 is the sub-cooler type heat exchanger similar to the same heat exchanger unit 8 in figure 1. The second heat exchanger 50 is the combined condenser/ de-superheater type heat exchanger referred to above. This second heat exchanger comprises a water conduit 57 which is supplied with water at condensation temperature of the refrigerant fluid in the refrigerant circuit 11 from water inlet 35 and pump 36. Pump 36 is carefully controlled for regulating the flow rate through the second heat exchanger by means of sensors 34, 40, 41, and 45 through a control unit. The combined second heat exchanger does not heat to set point temperature in a single pass, but water will be heated gradually in multi passes through the second heat exchanger.
A further difference with the embodiment of figure 1, is that in the second embodiment in figure 2 water which is preheated in the sub-cooler type heat exchanger 8 is provided through outlet 60 to the intermediate level B in the vessel 3. The embodiment of figure 2 is based on the insight that significant energy savings can be obtained by separating the sub-cooler type heat exchanger unit from any of the other heat exchanger units in the system.

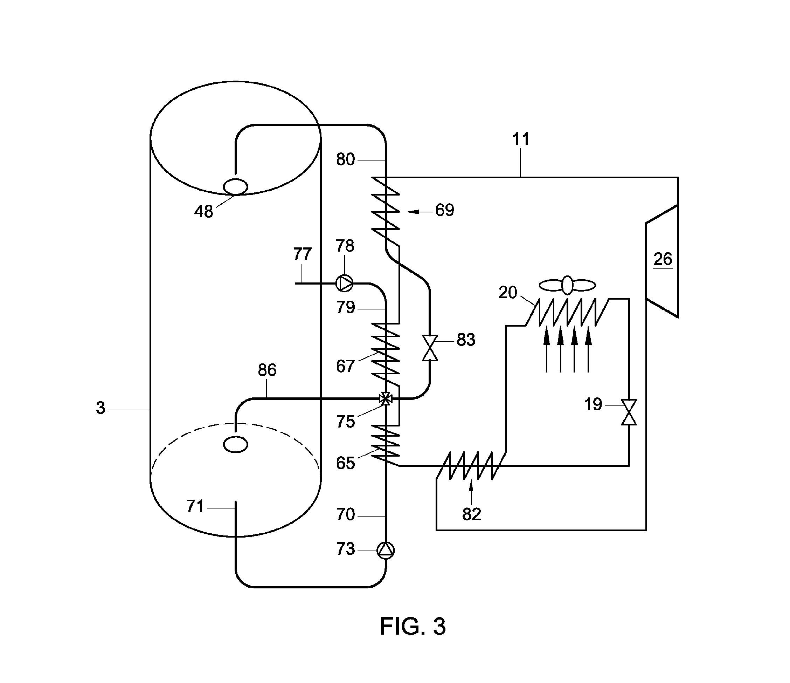

Yet a further embodiment of the present invention is illustrated in figure 3. The embodiment of figure 3 comprises heat exchanger units 65 (sub-cooler heat exchange), 67 (condensation unit), and 69 (de-superheater heat exchanger). Sub-cooler type heat exchanger unit 65 comprises a first conduit 70 which is fed by a controlled pump 73 from an inlet 71 at the bottom of the vessel 3. Condensation unit type heat exchanger unit 67 is operated in unidirectional flow (both the water flow and the refrigerant fluid have the same direction). The second heat exchanger unit 67 comprises a water conduit 79 which is fed from an inlet 77 by pump 78. In between the first heat exchanger unit 65 and a second heat exchanger unit 67, a four-way valve 75 enables to release water from the first heat exchanger unit 65 through outlet 86 (at condensation temperature of refrigerant fluid), and to provide the water from the condensation unit type heat exchanger 67 to the de-superheater heat exchanger 69. A thermal expansion valve 83 is present in between the second heat exchanger 67 and the third heat exchanger 69 of the system. The third heat exchanger 69 comprises a water conduit 80 which releases the water to a water outlet 48 at the top of the vessel 3. The four-way valve 75 of the system may also be used to release the water from the second heat exchanger 67 through the outlet 86, while at the same time providing the water from the first heat exchanger 65 directly to the third heat exchanger 69. Since the second heat exchanger unit 67 operates in unidirectional flow, water is drawn from an inlet 77 which is at a higher position in the vessel 3 than the water outlet 86 through which the (slightly warmer) water is released. Heat convection and circulation in the intermediate level B of the vessel 3 will cause the temperature at the intermediate level B in vessel 3 to become more or less constant.

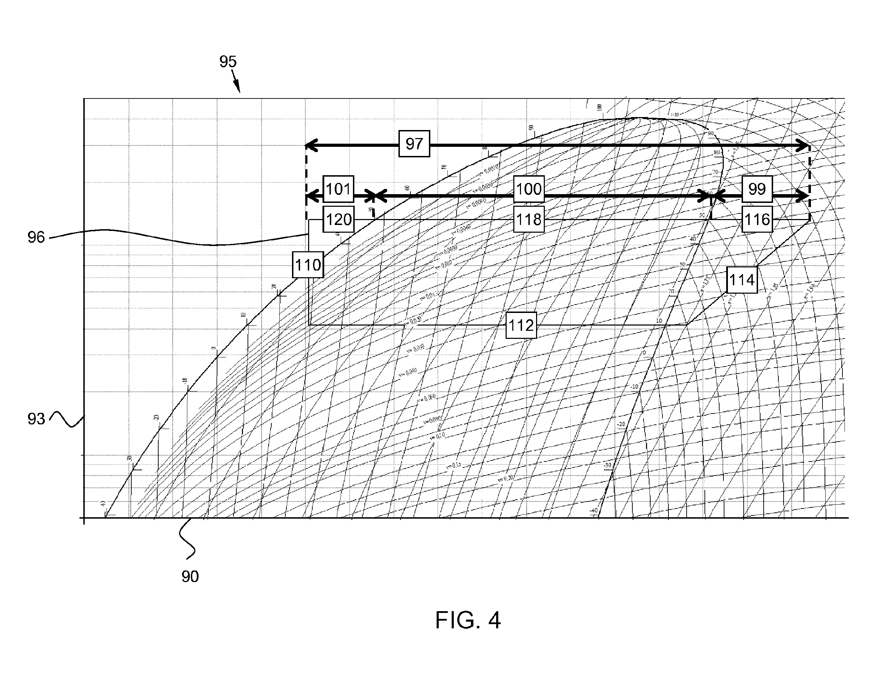

Figure 4 illustrates a pressure versus enthalpy diagram illustrating the heat pump cycle applied in embodiments of the present invention. In figure 4, the enthalpy is provided on the horizontal axis 90, while the pressure is provided on the vertical axis 93. The graph 95 further includes the example thermodynamic cycle schematically indicated by 96. The thermodynamic cycle is a vapour compression cycle consisting of an expansion valve (step 110), an evaporator (step 112), and a compressor (step 114), for heating up the subcooled liquid state refrigerant fluid to a superheated gas state. Then at the higher pressure level, the thermodynamic cycle comprises the de-superheater step 116, the condenser step 118, and the liquid sub-cooler step 120 prior to providing a refrigerant fluid back to the expansion valve step 110.

The total heat flow provided to the water is indicated by the length of the arrow 97 in the graph. Each of the arrows 99, 100, and 101 illustrate the contribution of heat of each of the heat exchanger units of the system. To optimize heat transfer of each of the heat exchanger units in a water heater in accordance with the present invention, the flow rate is regulated such that the global ratio's between the amount of water flowing through each of the heat exchanger units is the same as the ratio's of the relative contributions of heat provided to the water by each of the heat exchanger units. Therefore, dividing the length of arrow 101 by the length of arrow 97 will provide the ratio of the flow rate through the first heat exchanger unit. Similar, by dividing the length of arrow 100 by the length of arrow 97, the ratio of the flow rate through the condenser unit can be calculated and likewise, the ratio of the flow rate through the de-superheater heat exchanger can be calculated by dividing the length of arrow 99 by the length of arrow 97. The fractions obtained by making these calculations mutually define the ratio of the flow rate through each of the heat exchangers. If one of the heat exchangers is therefore actually regulated at a desired flow rate using the temperature readings, the flow rate of water through the other heat exchanger units can be calculated using the above defined ratio.

As is evident from the above description the heat exchangers are designed and controlled to match the state change of the refrigerant at the high pressure side (i.e. the refrigerant side) of the heat pump. The control of the first heat exchanger is focused on creating a subcooled liquid with a temperature just above the water temperature supplied to heat exchanger one. The control of the second heat exchanger is at least focused on providing a fully condensed refrigerant without sub cooling the liquid (note that in embodiments wherein no third heat exchanger is present, the role of such a third heat exchanger may be fulfilled by the second heat exchanger in addition to its regular function). A third heat exchanger present in some embodiments may be focused on the delivery of water at the top outlet at the final temperature (=set point temperature of hot tap water). The flow regulation units of the present invention may be formed of pumps (e.g. pumps 30, 36, 73 or 78), flow regulation valves (e.g. valve 42), or any other means that enables to regulate the flow.

Although in the above description the invention has been explained and illustrated with reference to some specific embodiments thereof, the scope of the invention is merely defined by the scope of the impended claims.

## Claims

1. A water heater for heating water stored in at least one vessel, comprising a heat pump for performing a thermodynamic cycle for providing heat from a refrigerant fluid to the water for heating of the water, wherein the heat pump is arranged for circulating the refrigerant fluid through a plurality of heat exchanger units such as to cool the refrigerant fluid from a superheated gas state to a sub-cooled liquid state while providing heat to the water, wherein the plurality of heat exchanger units comprises:
a first heat exchanger unit for pre-heating of the water while cooling the refrigerant fluid to the sub-cooled liquid state, comprising a first water conduit for transferring heat from the refrigerant fluid to the water; and
a second heat exchanger unit including a refrigerant condenser unit for further heating of the water while condensing the refrigerant fluid, the second heat exchanger unit comprising a second water conduit for transferring heat from the refrigerant fluid to the water;
wherein the water heater further comprises one or more water inlets for providing water to the heat exchanger units, at least one water outlet for returning water from the heat exchanger units to the vessel, and a plurality of flow regulation units including a first regulation unit for establishing a water flow through the first water conduit and a second regulation unit for establishing a water flow through the second water conduit, for enabling independent regulation of the flow rate through said first and second water conduit for minimizing deviations in a temperature difference between the refrigerant fluid and the water in each of the first and second heat exchanger unit.

2. Water heater in accordance with claim 1, further comprising a control unit connected to at least one temperature sensor for determining said temperature difference between the water and the refrigerant fluid in at least one of the heat exchanger units, said control unit being further connected to one or more of the flow regulation units associated with said at least one heat exchanger unit, for controlling said flow regulation unit dependent on the determined temperature difference.

3. Water heater in accordance with claim 1 or 2, wherein the plurality of heat exchanger units further comprises a third heat exchanger unit for further heating of the water while cooling the refrigerant fluid while in the superheated gas state prior to condensing thereof, the third heat exchanger unit comprising a third water conduit for transferring heat from the refrigerant fluid to the water.

4. Water heater in accordance with claim 3, wherein the plurality of flow regulation units further comprises a third regulation unit for establishing a water flow through the third water conduit, and for enabling independent regulation of the flow rate through third water conduit for minimizing the temperature difference between the refrigerant fluid and the water in the third heat exchanger unit.

5. Water heater in accordance with claim 3, wherein the second and the third heat exchanger units are interconnected such as to form a single heat exchanger, and wherein the third water conduit receives the water flow from the second water conduit.

6. Water heater in accordance with any of the previous claims, wherein the flow regulation units, such as one or more of the third, second and third regulation unit, comprise at least one of a pump or a flow regulation valve.

7. Water heater in accordance with any of the previous claims, wherein for establishing a stratified temperature profile across the height dimension of the vessel, the at least one water outlet is arranged at a height position dependent on a water temperature of water provided there from.

8. Water heater in accordance with claim 7, wherein a last one of said heat exchanger units comprises a heater outlet arranged at an upper section of the vessel for providing heated water to said upper section for obtaining the stratified temperature profile.

9. Water heater in accordance with claim 7 or 8, wherein the refrigerant condenser of the second heat exchanger comprises a condenser outlet arranged at an intermediate height section of the vessel for obtaining the stratified temperature profile.

10. Water heater in accordance with any of the claims 7-9, further comprising a fresh water feed inlet for providing fresh water to the vessel, the fresh water feed inlet being arranged at a bottom section or lower height section of the vessel for obtaining the stratified temperature profile.

11. Water heater in accordance with any of the claims 7-10, wherein the one or more inlets comprise at least one of:
a first inlet for providing water from the vessel to the first heat exchanger, the first inlet being located at said bottom or lower height section of the vessel for drawing cold water there from; or
a second inlet for providing water from the vessel to the second or the third heat exchanger unit, the second inlet being located at said intermediate height section of the vessel for drawing water having a temperature near a condensation temperature of the refrigerant fluid.

12. Water heater in accordance with any one or more of the previous claims, wherein the heat pump is arranged for performing a vapour-compression cycle, the heat pump further comprising an expansion unit for receiving the refrigerant fluid in the sub-cooled liquid state, an evaporator downstream the expansion unit, and a compressor for providing the refrigerant fluid in the superheated gas state.

13. Water heater in accordance with any of the previous claims, wherein the second regulation unit is arranged for maximizing said water flow through the second conduit such as to minimize a temperature gradient of the water across the refrigerant condenser.

14. Water heater system comprising one or more water heaters in accordance with any of the previous claims, wherein one or more associated inlets and outlets of said water heaters are interconnected such as to share vessels between the water heaters.

15. Use of a water heater in accordance with any one or more of the claims 1-13 for the preparation of heated water in a building, such as tap water, or heated water in a heating system for heating said building.
